(19) Europäisches Patentamt
European Patent Office
Office européen des brevets

(11) **EP 3 222 148 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
*A23G 1/18* (2006.01)      *A23G 1/00* (2006.01)
*A23G 3/34* (2006.01)      *A23G 3/02* (2006.01)

(21) Anmeldenummer: **16000711.8**

(22) Anmeldetag: **24.03.2016**

(54) **TEMPERIERMODUL**

TEMPERING MODULE

MODULE D'EQUILIBRAGE DE TEMPERATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.09.2017 Patentblatt 2017/39**

(73) Patentinhaber: **Bühler GmbH**
**74211 Leingarten (DE)**

(72) Erfinder:
• **Grötsch, Heiko**
  **20251 Hamburg (DE)**
• **Hiltscher, Markus**
  **22339 Hamburg (DE)**
• **Schieritz, Peter**
  **20257 Hamburg (DE)**

(74) Vertreter: **Thum, Bernhard**
**Wuesthoff & Wuesthoff**
**Patentanwälte PartG mbB**
**Schweigerstraße 2**
**81541 München (DE)**

(56) Entgegenhaltungen:
EP-A2- 0 727 147          DE-A1- 19 637 098
DE-U1-202014 001 005      GB-A- 826 502
GB-A- 2 186 476           US-A- 3 291 031

EP 3 222 148 B1

**Beschreibung**

Die vorliegende Erfindung betrifft ein Temperiermodul für eine Temperiermaschine zum Temperieren einer Lebensmittelmasse. Die vorliegende Erfindung betrifft ferner eine Temperiermaschine mit wenigstens einem derartigen Temperiermodul.

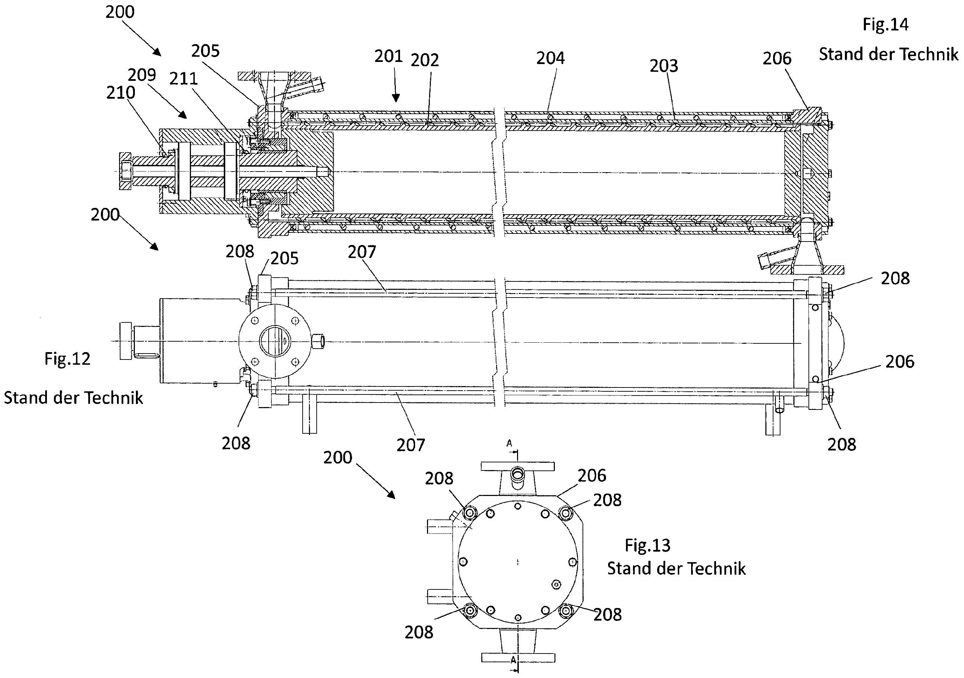

Aus dem Stand der Technik sind Temperiermaschinen bzw. Temperiermodule bekannt. Eines der aus dem Stand der Technik bekannten Temperiermodule ist in den Figuren 12 bis 14 gezeigt, wobei Figur 14 eine Schnittansicht entlang der Schnittlinie A-A in Figur 13 darstellt. Dieses Temperiermodul 200 weist ein Temperierrohr 201 und eine Schnecke 202 auf. Das Temperierrohr 201 umfasst ein Innenrohr 203 und ein Außenrohr 204 (Figur 14). An den Enden des Temperierrohrs 201 bzw. an den Enden des Innenrohrs 203 und des Außenrohrs 204 sind Anschlussflansche 205 und 206 angeordnet. Die Anschlussflansche 205 und 206 werden über Zuganker 207 gegeneinander verspannt. Dazu weisen die Anschlussflansche 205 und 206 Öffnungen auf, in die die Zuganker 207 eingesteckt werden können. Zum Verspannen der Anschlussflansche 205 und 206 über die Zuganker 207 sind Muttern 208 vorgesehen. Mit dem Bezugszeichen 209 ist in den Figuren 12 und 14 der Antrieb der Schnecke 202 bezeichnet. Der Antrieb 209 umfasst Zahnkränze 210 und 211, die über Kettentriebe (nicht gezeigt) von einem nicht gezeigten Motor angetrieben werden können. Der Motor ist von dem Temperiermodul 200 beabstandet angeordnet.

Aufgrund der Vielzahl von Einzelteilen ist das in den Figuren 12 bis 14 gezeigte Temperiermodul 200 nur mit einem relativ großen Zeitaufwand zu reinigen, da zur Reinigung unter anderem die Muttern 208 der Zuganker 207 gelöst und die Zuganker 207 demontiert werden müssen. Darüber hinaus können sich an den Fügestellen bzw. Fügespalten, beispielsweise zwischen dem Innenrohr 204 des Temperierrohr 201 und den Anschlussflanschen 205, 206, Verunreinigungen ansammeln, was bei der Produktion von Lebensmitteln bzw. bei der Handhabung von Lebensmittelmasse unter hygienischen Gesichtspunkten unter allen Umständen zu vermeiden ist.

GB 826 502 A1 offenbart eine Vorrichtung, die in zwei Zylindern angeordnete Schnecken aufweist. Um die Schnecken herum sind in den beiden Zylindern Kanäle ausgebildet, durch die ein Temperiermittel geleitet werden kann.

Es ist eine Aufgabe der vorliegenden Erfindung ein Temperiermodul der eingangs bezeichneten Art bereitzustellen, das mit einem vereinfachten Aufbau Verunreinigungen der Lebensmittelmasse verhindert und schnell hygienisch gereinigt werden kann.

Diese Aufgabe wird mit einem Temperiermodul der eingangs bezeichneten Art mit den Merkmalen des Anspruchs 1 gelöst.

Weitere Ausführungsformen gehen aus den abhängigen Ansprüchen hervor.

Das erfindungsgemäße Temperiermodul für eine Temperiermaschine zum Temperieren einer Lebensmittelmasse umfasst

- wenigstens eine Schnecke, und
- wenigstens ein Temperierrohr, in das die Schnecke einsetzbar ist. Das Temperierrohr und die Schnecke legen zwischen sich einen Lebensmittelmasseförderkanal fest. Das Temperierrohr umfasst wenigstens ein Innenrohr und wenigstens ein Außenrohr. Das Innenrohr und das Außenrohr legen zwischen sich wenigstens eine Temperierkammer fest. Erfindungsgemäß sind das Innenrohr und das Außenrohr dauerhaft fest miteinander verbunden.

Durch die dauerhaft feste Verbindung des wenigstens einen Innenrohrs und des wenigstens einen Außenrohrs kann bei dem erfindungsgemäßen Temperiermodul das Temperierrohr als eine separate bzw. einstückige Baugruppe gehandhabt werden, die einen hygienischen Verarbeitungsprozess der Lebensmittelmasse ermöglicht und eine schnelle und einfache Reinigung des Temperiermoduls gewährleistet. Das Temperierrohr weist keine lösbaren Fügestellen bzw. Fügespalte auf, an denen sich Verunreinigungen ansammeln können. Zudem kann durch die dauerhaft feste Verbindung des wenigstens einen Innenrohrs und des wenigstens einen Außenrohrs sichergestellt werden, dass aus der Temperierkammer keine Verunreinigungen in den Lebensmittelmasseförderkanal und damit in die Lebensmittelmasse eingebracht werden können.

Bei dem erfindungsgemäßen Temperiermodul kann nur die Innenumfangsfläche des Temperierrohrs mit der Lebensmittelmasse in Kontakt kommen. Sollte die mit dem Temperiermodul zu temperierende Lebensmittelmasse gewechselt werden müssen, reicht es aus, die Innenumfangsfläche bzw. das Innenrohr des Temperierrohrs zu säubern und dabei die Reste der Lebensmittelmasse zu entfernen. Nach der Reinigung der Schnecke und dem erneuten zusammensetzen des Temperiermoduls kann das Temperiermodul dann zum Temperieren einer neuen Lebensmittelmasse verwendet werden, ohne dass die neue Lebensmittelmasse mit Resten der vorherigen Lebensmittelmasse verunreinigt wird. Auf diese Weise wird durch das erfindungsgemäße Temperiermodul ein schneller Lebensmittelmassewechsel erreicht.

Gemäß einer Ausführungsform der Erfindung kann das Temperierrohr wenigstens einen ersten Anschlussflansch und wenigstens einen zweiten Anschlussflansch aufweisen. Der erste Anschlussflansch und der zweite Anschlussflansch können das Innenrohr und das Außenrohr dauerhaft fest miteinander verbinden. Das Innenrohr und das Außenrohr können mit dem ersten Anschlussflansch und dem zweiten Anschlussflansch eine dauerhaft fest miteinander verbundene Baugruppe bilden. Diese Baugruppe kann als ein Teil gehandhabt und gereinigt werden. Zwischen dem Innenrohr und dem Außenrohr sowie dem ersten Anschlussflansch und dem zweiten Anschlussflansch werden aufgrund der dauerhaft festen Verbindung keine Fügespalte gebildet. Es sind keine Verbindungsmittel oder Mittel zum Verspannen der Anschlussflansche, wie zum Beispiel die aus dem Stand der Technik bekannten Zuganker, zum Verbinden des Innenrohrs und des Außenrohrs mit den Anschlussflanschen notwendig. Die Anschlussflansche können an den axialen Enden des Innenrohrs und des Außenrohrs die Temperierkammer begrenzen. Mit anderen Worten kann die Temperierkammer von dem Innenrohr, dem Außenrohr, dem ersten Anschlussflansch und dem zweiten Anschlussflansch festgelegt werden. Die Anschlussflansche können sich zum Festlegen der wenigstens einen Temperierkammer zumindest abschnittsweise zwischen das Innenrohr und das Außenrohr hinein erstrecken.

Das Innenrohr, das Außenrohr, der erste Anschlussflansch und der zweite Anschlussflansch können stoffschlüssig miteinander verbunden sein. Insbesondere können das Innenrohr, das Außenrohr, der erste Anschlussflansch und der zweite Anschlussflansch miteinander verschweißt sein. Es ist jedoch auch denkbar, dass diese Komponenten des Temperiermoduls über eine andere stoffschlüssige Verbindungsart, wie zum Beispiel Verkleben, miteinander verbunden werden. Soweit möglich, sind alle stoffschlüssig miteinander verbundenen, insbesondere verschweißten Komponenten aus Edelstahl hergestellt.

Der erste Anschlussflansch kann mit wenigstens einem Anschlussstück für einen Motor verbunden sein. Der Motor kann zum Antreiben der Schnecke dienen. Der Motor kann direkt an dem wenigstens einen Anschlussstück angebracht sein. Der Motor kann über das Anschlussstück mit dem Temperierrohr verbunden sein. Das Anschlussstück kann ein Zwischenstück zwischen dem Motor und dem ersten Anschlussflansch bzw. dem Temperierrohr bilden. Der Motor kann aufgrund seiner direkten Verbindung mit dem Temperierrohr über das Anschlussstück schnell zur Reinigung von dem Temperierrohr abmontiert werden.

Der zweite Anschlussflansch kann mit einem Verschlusselement verbunden sein, an dem die Schnecke gelagert ist und das ein Ende des Temperiermoduls bildet.

Das Verschlusselement kann zur Entnahme der wenigstens einen Schnecke abnehmbar mit dem zweiten Anschlussflansch verbunden sein. Beispielsweise kann das Verschlusselement mit dem zweiten Anschlussflansch verschraubt sein. Um einen Nutzer den Zugriff auf die Schnecke in dem Temperierrohr zu erleichtern, können die Schrauben beispielsweise in Form von Griff- oder Flügelschrauben ausgebildet sein. Die Griffschrauben können beispielsweise Sterngriffschrauben sein. Mit derartigen Schrauben kann der Nutzer das Verschlusselement ohne zusätzliches Werkzeug demontieren, um die Schnecke aus dem Temperierrohr zu entnehmen.

Der Motor kann über wenigstens eine Welle mit der wenigstens einen Schnecke verbunden sein. Der Motor kann über die Welle die Schnecke direkt antreiben. Die Welle kann sich durch das Anschlussstück erstrecken. Wie voranstehend bereits erwähnt wurde, kann der Motor an dem wenigstens einen Anschlussstück angebracht und derart über das Anschlussstück mit dem Temperierrohr gekoppelt werden. Zur Reinigung des Temperiermoduls kann der Motor schnell und einfach von dem Temperierrohr und der Schnecke dadurch gelöst werden, dass das Anschlussstück von dem Temperierrohr abmontiert wird. Der Motor kann beispielsweise mit dem wenigstens einen Anschlussstück verschraubt sein, das wiederum mit dem wenigstens einen Temperierrohr verschraubt sein kann.

Der erste Anschlussflansch und der zweite Anschlussflansch können jeweils eine Einleitöffnung zum Einleiten der Lebensmittelmasse in den Lebensmittelmasseförderkanal oder wenigstens eine Ausleitöffnung zum Ausleiten der Lebensmittelmasse aus dem Lebensmittelmassenförderkanal aufweisen. Anders ausgedrückt weist entweder der erste Anschlussflansch eine Einleitöffnung und der zweite Anschlussflansch eine Ausleitöffnung oder der erste Anschlussflansch eine Ausleitöffnung und der zweite Anschlussflansch eine Einleitöffnung auf. Welche Anordnung der Einleitöffnung und der Ausleitöffnung zum Einsatz kommt, hängt maßgeblich von den mit dem Temperiermodul verbundenen weiteren Komponenten ab, die dem Temperiermodul die Lebensmittelmasse zuleiten oder denen die Lebensmittelmasse aus dem Temperiermodul zugeführt wird. Eine Komponente, der Lebensmittelmasse aus einem Temperiermodul zugeführt werden kann, kann ein weiteres Temperiermodul sein.

Die Temperierkammer kann einen oder mehrere Temperierkanäle aufweisen, vorzugsweise wenigstens einen ersten Temperierkanal und wenigstens einen zweiten Temperierkanal. Der erste Temperierkanal und der zweite Temperierkanal können über wenigstens ein Trennelement in der wenigstens einen Temperierkammer getrennt sein. Das wenigstens ein Trennelement kann ein Trennring sein. Um die Lebensmittelmasse möglichst effizient auf eine vorbestimmte Zieltemperatur temperieren zu können, werden wenigstens zwei Temperierkanäle ausgebildet, die sich nicht über die gesamte Länge des Temperierrohrs erstrecken, sondern nur über Teilabschnitte des Temperierrohrs. Der erste Temperierkanal und der zweite Temperierkanal erstrecken sich somit über einen vorbestimmte Abschnitt des Temperierrohrs, sodass jeder Temperierkanal die Lebensmittelmasse in dem Lebensmittelkanal auf die dem jeweiligen Temperierkanal zugeordnete Temperatur bringen kann.

Der erste Temperierkanal und der zweite Temperierkanal können sich im wesentlichen wendelförmig durch die Temperierkammer erstrecken. Dazu können in der Temperierkammer Rippen oder Wände vorgesehen sein, die die Wendelgänge für die beiden Temperierkanäle in der Temperierkammer festlegen bzw. begrenzen. Die Wände oder Rippen können sich dazu selbst wendelförmig durch die Temperierkanäle erstrecken. Dies kann beispielsweise durch Einlegen eines im Wesentlichen wendelförmig ausgebildeten Rundstahls oder Vierkantstahls erreicht werden.

Das Temperierrohr kann Anschlüsse aufweisen, über die der erste Temperierkanal und der zweite Temperierkanal mit einem ersten Temperierkreislauf und einem zweiten Temperierkreislauf zur Zufuhr eines Temperierfluids koppelbar sind. Anders ausgedrückt ist jedem Temperierkanal ein separater Temperierkreislauf zugeordnet. Jeder Temperierkanal kann einen Zuführanschluss und einen Abführanschluss für das Temperierfluid aufweisen. Der Zuführanschluss und der Abführanschluss sind jeweils an einem Ende des ersten Temperierkanals und des zweiten Temperierkanals vorgesehen. Da jeder Temperierkanal mit einem Temperierkreislauf gekoppelt sein kann, kann eine vorbestimmte zum Temperieren der Lebensmittelmasse geeignete Temperatur des Temperierfluids eingestellt bzw. aufrechterhalten werden. Auf diese Weise kann gewährleistet werden, dass Lebensmittelmasse in dem Lebensmittelmasseförderkanal am Ende des Temperierrohrs bzw. des Temperiermoduls die vorbestimmte Temperatur aufweist. Durch die Kopplung der Temperierkanäle mit getrennten bzw. separaten Temperierkreisläufen kann die Lebensmittelmasse in dem Lebensmittelmasseförderkanal kontinuierlich auf die vorbestimmte Temperatur gebracht werden.

Das Temperierrohr kann wenigstens einen Anschluss zur Temperaturkontrolle der Lebensmittelmasse in dem Lebensmittelmasseförderkanal aufweisen. Der Anschluss zur Temperaturkontrolle kann sich durch das Außenrohr und das Innenrohr bis zum Lebensmittelmasseförderkanal erstrecken. Der Anschluss zur Temperaturkontrolle kann mit einem Temperatursensor versehen oder mit einem Temperatursensor gekoppelt sein.

Die vorliegende Erfindung betrifft ferner eine Temperiermaschine zum Temperieren einer Lebensmittelmasse mit wenigstens einem Temperiermodul der voranstehend beschriebenen Art.

Gemäß einer Ausführungsform kann die Temperiermaschine mehrere Temperiermodule der voranstehend beschriebenen Art aufweisen. Die einzelnen Temperiermodule können jeweils über einen Verbindungskanal zum Fördern der Lebensmittelmasse von einem Temperiermodul zum massestromabwärts liegenden Temperiermodul gekoppelt sein. Der Verbindungskanal kann sich beispielsweise zwischen Anschlussflanschen von benachbarten Temperiermodulen erstrecken und diese Anschlussflansche miteinander koppeln.

Der Verbindungskanal kann zum Fördern der Lebensmittelmasse von einem Temperiermodul zum nächsten Temperiermodul eine Ausleitöffnung eines Temperiermoduls mit einer Einleitöffnung des nächsten Temperiermoduls koppeln.

Das Temperiermodul kann an wenigstens einem verlagerbaren oder stationären Gestell angeordnet sein. Das Temperiermodul kann insbesondere horizontal an dem wenigstens einen Gestell angeordnet sein. Ist das Gestell verlagerbar ausgeführt, kann das Gestell auch in vertikaler Richtung zwischen einer Produktionsposition und einer Bewegungsposition verlagerbar sein. Dazu kann das Gestell Hebelanordnung aufweisen. Die Hebelanordnung kann derart ausgebildet sein, dass sie die Temperiermaschine zwischen der Produktionsposition und einer Bewegungsposition verlagern kann. In der Bewegungsposition ist die Temperiermaschine dann relativ bewegbar. In der Bewegungsposition kann die Temperiermaschine weg von der Produktionsposition und der Produktionslinie beispielsweise zu einer Reinigungsstation gebracht werden. Die Hebelanordnung kann beispielsweise in einer ersten Richtung, um die Temperiermaschine von der Produktionsposition in die Bewegungsposition zu verlagern, und in einer zweiten Richtung betätigt werden, um die Temperiermaschine von der Bewegungsposition in die Produktionsposition zu überführen. Die Steuerung und Handhabung der wenigstens einen Hebelanordnung ist demnach relativ einfach.

Die Temperiermaschine kann ferner eine Steuerung aufweisen. Die Steuerung der Temperiermaschine kann in einem Schaltschrank angeordnet sein. Die Steuerung der Temperiermaschine kann separat von der Steuerung weiterer Aggregate einer Produktionslinie zur Herstellung von Lebensmittelprodukten ausgeführt sein. Die Temperiermaschine kann ebenfalls ausschließlich der Temperiermaschine zugeordnete Wasserkreisläufe aufweisen. Die Temperiermaschine kann somit unabhängig von den weiteren Aggregaten einer Produktionslinie gesteuert und mit Wasser versorgt werden. Die weiteren Aggregate einer Produktionslinie können beispielsweise ein die Lebensmittelmasse enthaltender Tank und eine Überziehvorrichtung zum Überziehen von Lebensmittelprodukten mit der Lebensmittelmasse sein. Die Lebensmittelmasse aus dem Tank wird der Temperiermaschine zugeführt, in der Temperiermaschine auf eine vorbestimmte, zum Überziehen von Lebensmittelprodukten geeignete Temperatur gebracht und im Anschluss daran einer Überziehvorrichtung zugeführt, die mit der temperierten Lebensmittelmasse Lebensmittelprodukte überziehen kann.

Bei einer Weiterbildung der Erfindung kann insbesondere vorgesehen sein, dass die Temperiermaschine dazu ausgebildet ist, benachbart zu einem Massevorratsbehälter zum Speichern der Lebensmittelmasse und/oder zu einer die Lebensmittelmasse weiterverarbeitenden Vorrichtung, insbesondere einer Lebensmittelmasse-Überziehmaschine oder/und einer Lebensmittelmasse-Dekorationsmaschine oder/und einer Lebensmittelmasse-Gießmaschine, angeordnet zu sein. Dabei ist es möglich, dass der Massevorratsbehälter unmittelbar vor der Temperiermaschine oder unter Zwischenschaltung weiterer Komponenten angeordnet ist. Gleichermaßen ist es möglich, dass die die Lebensmittelmasse weiterverarbeitende Vorrichtung unmittelbar massestromabwärts der Temperiermaschine oder unter Zwischenschaltung weiterer Komponenten angeordnet ist.

Die vorliegende Erfindung betrifft ferner ein Verfahren zum Temperieren einer Lebensmittelmasse mit einem Temperiermodul der voranstehend beschriebenen Art, wobei die Temperierkammer von einem Temperierfluid, insbesondere glykolhaltiges Wasser oder andere geeignete Fluide, durchströmt wird, um die Lebensmittelmasse in dem Lebensmittelmasseförderkanal zu temperieren.

Eine Weiterbildung des erfindungsgemäßen Verfahrens sieht vor, dass die Lebensmittelmasse in einen ersten Temperierkanal eingeführt wird, der eine Dekristallisationsstufe für die Lebensmittelmasse bildet, wobei weiter die Lebensmittelmasse aus dem ersten Temperierkanal mittelbar oder unmittelbar in einen zweiten Temperierkanal geführt wird, der eine Kühlstufe bildet, und wobei die Lebensmittelmasse aus dem zweiten Temperierkanal in einen dritten Temperierkanal geführt wird, die eine Anwärmstufe bildet, wobei insbesondere jeder der Temperierkanäle über einen gesonderten Temperierfluidkreis mit Temperierfluid versorgbar ist. Es ist auch möglich, der Dekristallisationsstufe oder/und der Kühlstufe oder/und der Anwärmstufe jeweils mehr als einen Temperierkanal zuzuordnen oder/und diese so auszubilden, dass sie sich über mehrere Temperiermodule estrecken. In jeder der Komponenten Dekristallisationsstufe, Kühlstufe(n) und der Anwärmstufe wird in der Lebensmittelmasse ein vorbestimmtes Temperaturniveau eingestellt. Die Dekristallisationsstufe und die Anwärmstufe sind optional und können auch weggelassen werden.

Dabei kann erfindungsgemäß vorgesehen sein, dass dieses Temperaturniveau unter Steuerung der Temperatur und des Durchflusses des jeweiligen Temperierfluids in den zugehörigen Temperierfluidkreis oder/und unter Steuerung der Fördergeschwindigkeit der Lebensmittelmasse durch den jeweiligen Temperierkanal in Abstimmung mit der Länge des jeweiligen Temperierkanals erreicht wird. Durch geeignete Einstellung und Steuerung dieser Parameter wird eine vorbestimmte Verweilzeit der Lebensmittelmasse in dem jeweiligen Temperierkanal eingestellt und so das gewünschte Temperaturniveau in der Lebensmittelmasse während des Verfahrens erreicht. Insgesamt ergibt sich so über die gesamte Temperiermaschine ein wahlweise einstellbares Temperaturgefälle.

Im Folgenden werden beispielhafte Ausführungsformen der Erfindung mit Bezug auf die beigefügten Figuren beschrieben. Es stellen dar:

| | |
|---|---|
| Figur 1 | eine Vorderansicht eines Temperiermoduls gemäß der Erfindung; |
| Figur 2 | eine teilweise durchsichtig dargestellte Vorderansicht des Temperiermoduls gemäß der Erfindung; |
| Figur 3 | eine Schnittansicht entlang der Schnittlinie III-III in Figur 2; |
| Figur 4 | eine Schnittansicht entlang der Schnittlinie IV-IV in Figur 2; |
| Figur 5 | eine vergrößerte Ansicht des Details V-V in Figur 4; |
| Figur 6 | eine teilweise durchsichtig dargestellte Vorderansicht eines Temperierrohrs gemäß der Erfindung, |
| Figur 7 | eine teilweise durchsichtig dargestellte Seitenansicht des Temperierrohrs gemäß der Erfindung; |
| Figur 8 | eine perspektivische Ansicht der Temperiermaschine gemäß der Erfindung im Reinigungszustand; |
| Figur 9 | eine perspektivische Ansicht der Temperiermaschine gemäß der Erfindung im Produktionszustand; |
| Figur 10 | eine vergrößerte Ansicht des Details X in Figur 9; |
| Figur 11 | eine schematische Darstellung zur Erläuterung der Temperatursteuerung der erfindungsgemäßen Temperiermaschine; und |
| Figuren 12-14 | Darstellungen zum Stand der Technik. |

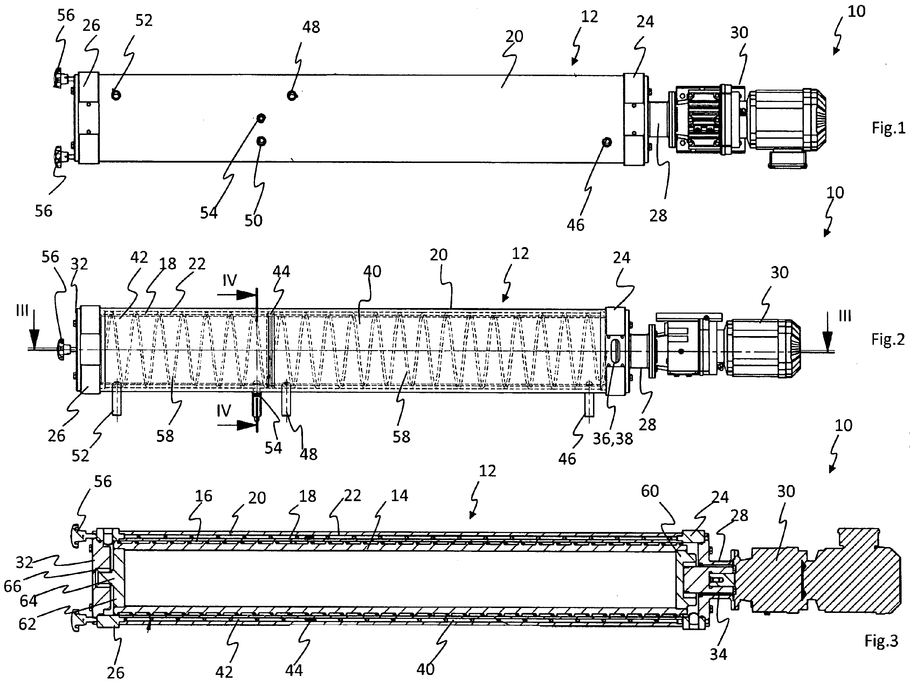

Figur 1 zeigt eine Vorderansicht eines Temperiermoduls 10.

Das Temperiermodul 10 weist ein Temperierrohr 12 auf. An den Enden des Temperierrohrs 12 sind der erste Anschlussflansch 24 und der zweite Anschlussflansch 26 angeordnet. An dem ersten Anschlussflansch 24 ist ein Anschlussstück 28 befestigt. An dem Anschlussstück 28 ist der Motor 30 angebracht. Der Motor 30 ist somit über das Anschlussstück 28 direkt mit dem Temperierrohr 12 gekoppelt. Der zweite Anschlussflansch 26 ist mit einem Verschlusselement 32 versehen. Das Verschlusselement 32 ist über Schrauben 56 mit dem zweiten Anschlussflansch 26 verschraubt. Die Schrauben 56 können Griffschrauben, insbesondere Sterngriffschrauben, sein.

An dem Temperierrohr 12 sind Anschlüsse 46, 48, 50 und 52 erkennbar. Die Anschlüsse 46,48 und die Anschlüsse 50,52 sind jeweils einem in dem Temperierrohr 12 ausgebildeten Temperierkanal 40,42 (siehe Figur 2) zugeordnet. Über die Anschlüsse 46, 48, 50, 52 können der erste Temperierkanal 40 und der zweite Temperierkanal 42 (siehe Figur 2) mit Temperierfluid versorgt werden. Das Temperierfluid ist glykolhaltiges Wasser.

Der weitere in Figur 1 erkennbare Anschluss 54 dient zur Temperaturkontrolle der Lebensmittelmasse. Der Anschluss 54 kann einen Temperatursensor (nicht gezeigt) aufweisen oder mit einem Temperatursensor gekoppelt sein.

Figur 2 zeigt eine Vorderansicht des Temperiermoduls 10 mit einem teilweise durchsichtig dargestellten Temperierrohr 12.

Das Temperierrohr 12 weist ein Innenrohr 18 und ein Außenrohr 20 auf. Das Innenohr 18 ist im wesentlichen koaxial zu dem Außenrohr 20 angeordnet. Das Innenrohr 18 und das Außenrohr 20 legen zwischen sich eine Temperierkammer 22 fest. In der Temperierkammer 22 sind der erste Temperierkanal 40 und der zweite Temperierkanal 42 ausgebildet, die über ein ringförmiges Trennelement 44 getrennt sind. Die Temperierkanäle 40, 42 erstrecken sich wendelförmig durch die Temperierkammer 22. Die wendelförmigen Temperierkanäle 40, 42 werden von Rippen bzw. Wänden 58 gebildet, die sich ebenfalls wendelförmig durch die Temperierkammer 22 erstrecken.

Der erste Temperierkanal 40 weist die Anschlüsse 46,48 auf, über die der Temperierkanal 40 mit einem Temperierkreislauf gekoppelt werden kann. Einer der Anschlüsse 46 oder 48 bildet einen Zulauf für das Temperierfluid. Der jeweils andere Anschluss 46 oder 48 bildet einen Abfluss für das Temperierfluid. Gleiches gilt für die Anschlüsse 50, 52 des zweiten Temperierkanals 42.

Das Innenrohr 18, das Außenrohr 20, der erste Anschlussflansch 24 und der zweite Anschlussflansch 26 sind stoffschlüssig dauerhaft fest miteinander verbunden. Insbesondere können die genannten Komponenten des Temperierrohrs 12 miteinander verschweißt sein. Das Temperierrohr 12 stellt eine einstückige Baugruppe dar, die die Temperierkammer 22 in sich einschließt. Die Temperierkammer 22 in dem Temperierrohr 12 ist bis auf die Anschlüsse 46, 48, 50, 52 in sich abgeschlossen.

In Figur 2 ist auch der Anschluss 54 zur Temperaturkontrolle der Lebensmittelmasse erkennbar. Der Anschluss 54 ist an dem Temperierrohr 12 ausgebildet und erstreckt sich bis zu der Innenumfangsfläche des Innenrohrs 18. Der Anschluss 54 bildet einen Durchgang durch das Temperierohr 12 bis zu dem Lebensmittelmasseförderkanal 16 (Figur 3).

Figur 3 zeigt eine Schnittansicht entlang der Schnittlinie III-III in Figur 2.

Das Temperiermodul 10 umfasst eine in dem Temperierrohr 12 angeordnete Schnecke 14. Das Temperierrohr 12 und die Schnecke 14 legen zwischen sich einen Lebensmittelmasseförderkanal 16 fest.

Die Schnecke 14 weist ein Kopplungselement 60 auf. Das Kopplungselement 60 ist an dem dem Motor 30 zugewandten Ende der Schnecke 14 angeordnet. Das Kopplungselement 60 ist mit einer Welle 34 verbunden. Das Kopplungselement 60 ist über die Welle 34 mit dem Motor 30 gekoppelt ist. Die Welle 34 erstreckt sich durch das Anschlussstück 28 von dem Motor 30 zu dem Kopplungselement 60 der Schnecke 14. An ihrem dem Verschlusselement 32 zugewandten Ende weist die Schnecke 14 ein weiteres Kopplungselement 62 auf. An dem Kopplungselement 62 ist ein Lagerabschnitt 64 ausgebildet. Der Lagerabschnitt 64 ist in Form eines Lagervorsprungs oder eines Lagerzapfens ausgebildet. Der Lagerabschnitt 64 an dem Kopplungselement 62 wird zur Lagerung der Schnecke 14 in einer Lagerstelle 66 an dem Verschlusselement 32 aufgenommen. Die Lagerstelle 66 an dem Verschlusselement 32 kann in Form einer zylindrischen Ausnehmung ausgebildet sein, die den Lagerabschnitt 64 aufnimmt. Nach Entfernen des Verschlusselements 32 kann die Schnecke 14 aus dem Temperierrohr 12 herausgezogen werden, beispielsweise zu Reinigungszwecken.

Das Innenrohr 18 und das Außenrohr 20 legen zusammen mit dem ersten Anschlussflansch 24 und dem zweiten Anschlussflansch 26 die Temperierkammer 22 in dem Temperierrohr 10 fest. In der Temperierkammer 22 sind der erste Temperierkanal 40 und der zweite Temperierkanal 42 ausgebildet. Der erste Temperierkanal 40 und der zweite Temperierkanal 42 sind über ein Trennelement 44 in Form eines Trennrings getrennt. Der erste Temperierkanal 40 erstreckt sich ca. über zwei Drittel der Länge des Temperierrohrs 12. Dementsprechend nimmt der zweite Temperierkanal 42 ca. ein Drittel der Länge des Temperierrohr 12 ein. Das Temperierrohr 12 und die darin ausgebildeten Temperierkanäle 40 und 42 umgeben den zwischen dem Innenrohr 14 des Temperierrohrs 12 und der Schnecke 14 festgelegten Lebensmittelmasseförderkanal 16, um die von der Schnecke 14 bewegte Lebensmittelmasse in dem Lebensmittelmasseförderkanal 16 zu temperieren.

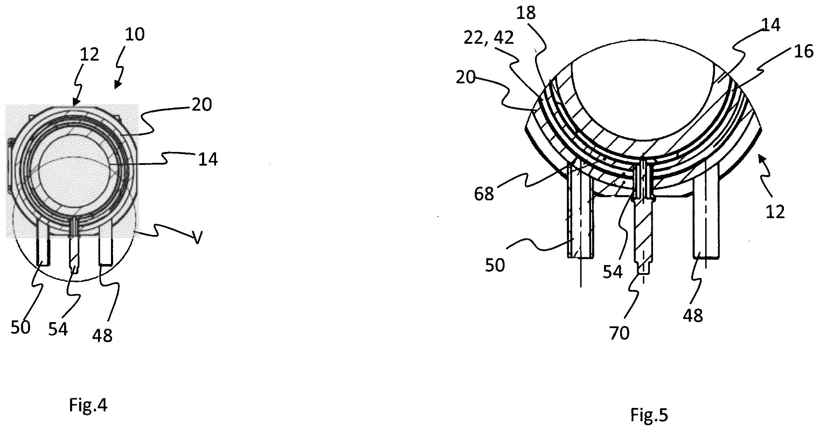

Figur 4 zeigt eine Schnittansicht entlang der Schnittlinie IV-IV in Figur 2.

In Figur 4 sind das Temperierrohr 12 und die Schnecke 14 des Temperiermoduls 10 gezeigt. An dem Temperierrohr 12 sind die Anschlüsse 48 und 50 ausgebildet, über die der erste Temperierkanal 40 und der zweiten Temperierkanal 42 mit Temperierfluid versorgbar sind.

Ferner ist in Figur 4 der Anschluss 54 zur Temperaturkontrolle gezeigt, der in der Schnittansicht gemäß Figur 4 zwischen den Anschlüssen 48 und 50 angeordnet ist.

Figur 5 zeigt eine vergrößerte Detailansicht des Details V in Figur 4.

Das Innenrohr 18 und das Außenrohr 20 des Temperierrohrs 12 legen zwischen sich Temperierkammer 22 fest. In der Schnittansicht gemäß Figur 5 ist der zweite Temperierkanal 42 der Temperierkammer 22 gezeigt.

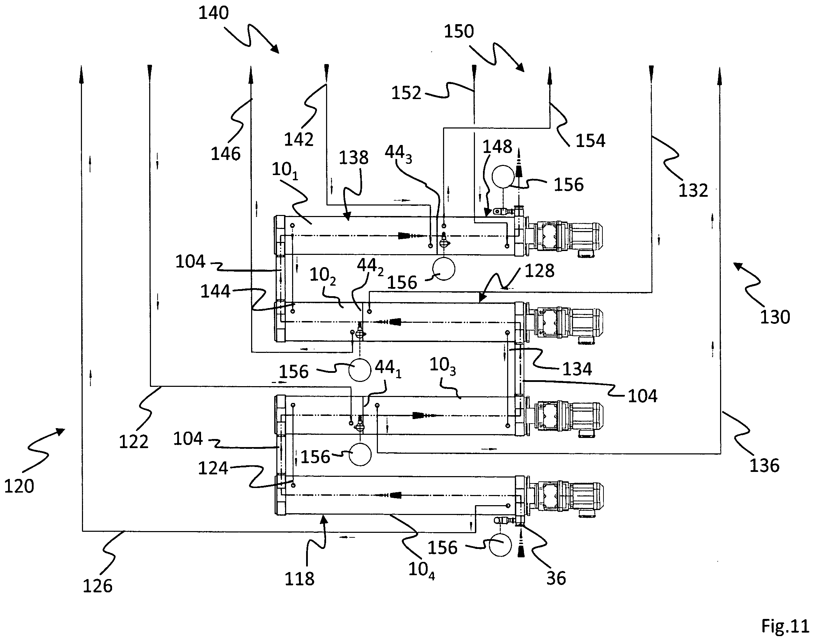

An dem Temperierrohr 12 sind die Anschlüsse 48 und 50 vorgesehen, über die die Temperierkammer 22 bzw. die Temperierkanäle 40 und 42 mit Temperierfluid versorgt werden können. Der Anschluss 50 ist rohrförmig ausgebildet. Der Anschluss 50 geht in eine Öffnung 68 in dem Außenrohr 20 des Temperierrohrs 12 über. Die Öffnung 68 mündet in den zweiten Temperierkanal 42 der Temperierkammer 22. Über den Anschluss 50 und die Öffnung 68 kann somit dem zweiten Temperierkanal 42 Temperierfluid zugeführt oder aus dem zweiten Temperierkanal 42 abgeführt werden. Dies gilt auch für die weiteren Anschlüsse 46, 48, 52. In Figur 5 ist nur der Anschluss 50 im Schnitt dargestellt, sodass sich die Beschreibung auf diesen in Schnitt dargestellten Anschluss 50 fokussiert hat. Auf die Wirkung der Unterteilung in unterschiedliche Temperierkanäle wird im Folgenden mit Bezug auf Figur 11 eingegangen.

Zwischen dem Innenrohr 18 des Temperierrohrs 12 und der Schnecke 14 wird der Lebensmittelmasseförderkanal 16 festgelegt, in dem die Lebensmittelmasse entlang des Temperierrohrs 12 durch die Wirkung der rotierenden Schnecke 14 gefördert wird. Der Anschluss 54 zur Temperaturkontrolle erstreckt sich durch das Temperierrohr 12, d.h. durch das Innenrohr 18 und das Außenrohr 20, bis zu diesem Lebensmittelmasseförderkanal 16. Der Anschluss 54 zur Temperaturkontrolle weist einen Temperatursensor 70 auf, mit dem die Temperatur der Lebensmittelmasse gemessen bzw. ermittelt werden kann.

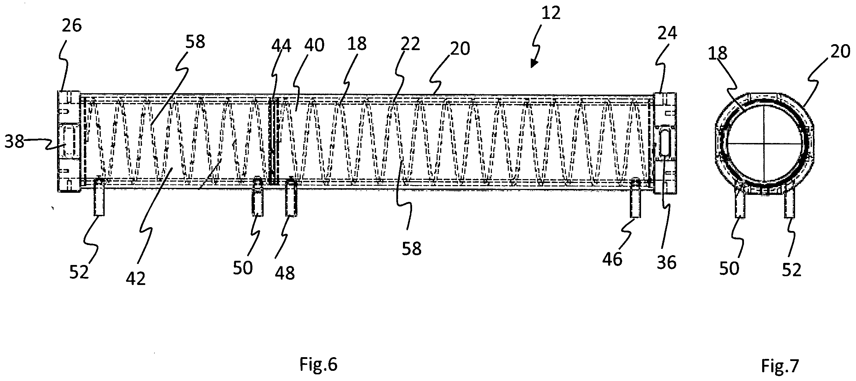

Figur 6 zeigt Vorderansicht eines teilweise durchsichtig dargestellten Temperierrohrs 12.

Das Temperierrohr 12 stellt eine separate Baugruppe dar, die als ein Teil gehandhabt werden kann. Das Temperierrohr 12 umfasst das Innenrohr 18, das Außenrohr 20, den ersten Anschlussflansch 24 und den zweiten Anschlussflansch 26. Das Innenrohr 18, das Außenrohr 20, der erste Anschlussflansch 24 und der zweite Anschlussflansch 26 sind dauerhaft fest miteinander verbunden. Die genannten Komponenten können insbesondere miteinander verschweißt sein. Durch die dauerhaft feste Verbindung der Komponenten des Temperierrohrs 12 zu einer Baugruppe bzw. Einheit kann verhindert werden, dass sich Verunreinigungen an Fügespalten ansammeln und die Lebensmittelmasse in dem Lebensmittelmasseförderkanal 16 kontaminieren. Durch die dauerhaft feste Verbindung des Innenrohrs 18, des Außenrohrs 20, des ersten Anschlussflanschs 24 und des zweiten Anschlussflanschs 26 und die dadurch im wesentlichen in sich abgeschlossenen Temperierkammer 22 kann ebenfalls verhindert werden, dass Temperierfluid aus der Temperierkammer 22 in den Lebensmittelmasseförderkanal 16 eindringen und die Lebensmittelmasse kontaminieren kann. Durch das als Baugruppe ausgebildete Temperierrohr 12 kann auch die Reinigung des Temperiermoduls 10 vereinfacht und beschleunigt werden, da keine Teile von dem Temperierrohr 12 abmontiert und aufwendig einzelnen gereinigt werden müssen. Aufgrund der dauerhaft festen Verbindung der Komponenten des Temperierrohrs 12 miteinander ist es ausreichend, die Innenumfangsfläche des Temperierrohrs 10 zu reinigen, da keine weiteren Komponenten bzw. Teile des Temperierrohrs 12 mit der Lebensmittelmasse in Kontakt kommen können.

In Figur 6 sind die Einleitöffnungen bzw. Ausleitöffnungen 36, 38 in dem ersten Anschlussflansch 24 und dem zweiten Anschlussflansch 26 erkennbar. Über die Öffnungen 36, 38 kann Lebensmittelmasse in das Temperiermodul 10 bzw. in den Lebensmittelmasseförderkanal 16 eingeleitet oder aus dem Lebensmittelmasseförderkanal 16 ausgeleitet werden. Die Öffnungen 36,38 erstrecken sich im wesentlichen in radialer Richtung durch die Anschlussflansche 24, 26. An der Ausleitöffnung 38 Öffnung kann auch ein Drucksensor (im Detail nicht gezeigt) angeordnet werden, der beispielsweise einen Druckanstieg oder einen Druckabfall erfassen kann. Dies kann beispielsweise auf eine unerwünscht starke Kristallisation der Lebensmittelmasse in dem zugehörigen Temperiermodul 10 hindeuten, sodass ein Eingriff in die Temperatursteuerung erforderlich ist, worauf im Folgenden noch eingegangen wird.

Figur 7 zeigt eine Seitenansicht des Temperierrohrs 12 gemäß Figur 6.

In Figur 7 wird ersichtlich, dass das Temperierrohr 12 einen konstanten Innendurchmesser aufweist. Es sind keine Absätze oder dergleichen an dem Temperierrohr 12 vorhanden, an denen sich Verunreinigungen ansammeln könnten. Der konstante Innendurchmesser des Temperierrohrs 12 trägt somit ebenfalls zur schnellen und einfachen Reinigung des Temperierrohrs 12 bei.

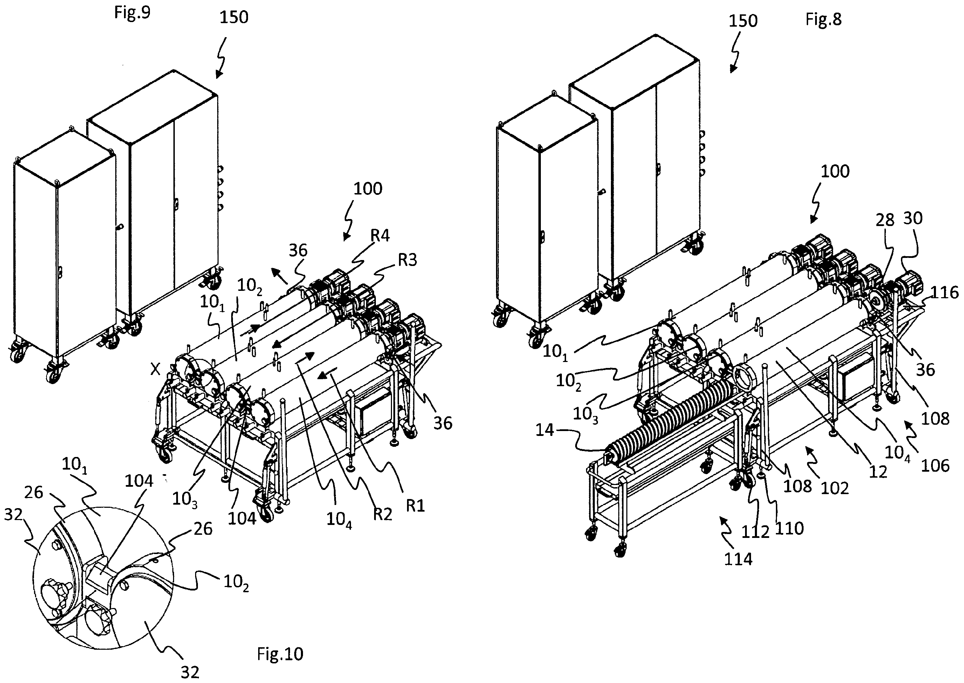

Figur 8 zeigt eine perspektivische Ansicht einer Temperiermaschine 100 und der Schaltschränke 150.

In den Schaltschränken 150 ist die Steuerung der Temperiermaschine 100 untergebracht. Die Temperiermaschine 100 weist eine eigene Steuerung auf, die unabhängig von der Steuerung der weiteren Komponenten einer Produktionslinie zur Herstellung von Lebensmittelprodukten ist. Die Temperiermaschine 100 kann mit einem Tank (nicht gezeigt) verbunden sein, der die Temperiermaschine 100 mit Lebensmittelmasse versorgt. Nach dem Temperieren der Lebensmittelmasse mit der Temperiermaschine 100 kann die temperierte Lebensmittelmasse, beispielsweise Schokolade, einer Überziehvorrichtung (nicht gezeigt) zugeführt werden, mit der die Lebensmittelprodukte mit einer Schicht der Lebensmittelmasse (Schokolade) überzogen werden können.

In Figur 8 ist die Temperiermaschine 100 im Reinigungszustand dargestellt. Die Temperiermaschine 100 umfasst vier Temperiermodule $10_1$, $10_2$, $10_3$, $10_4$, die horizontal an einem verlagerbaren Gestell 102 angeordnet sind. Das verlagerbaren Gestell 102 weist ein Hubfahrwerk 106 auf. Über die Hebelanordnungen 108 kann das Gestell 102 aus einer Produktionsposition, in der sich das Gestell 102 über die Füße 110 am Untergrund abstützt, in eine Bewegungsposition, in der sich das Gestell 102 über die Räder 112 am Untergrund abstützt, und zurück in die Produktionsposition verlagert werden. Über die Hebelanordnungen 108 kann die Temperiermaschine 100 in vertikaler Richtung angehoben oder abgesenkt werden.

Dass sich die Temperiermaschine 100 in Figur 8 im Reinigungszustand befindet, wird durch das teilweise demontierte Temperiermodul $10_4$ ersichtlich. Die Schnecke 14 wurde aus dem Temperierrohr 12 des Temperiermoduls $10_4$ entnommen und auf einem Rollwagen 114 abgelegt. Ferner wurde das Anschlussstück 28 zusammen mit Motor 30 von dem Temperierrohr 12 abmontiert. Da die Schnecke 14 über die Welle 34 (siehe Figur 3) direkt von dem Motor 30 angetrieben wird, kann die Schnecke 14 relativ schnell und einfach von dem Motor 30 zur Reinigung des Temperiermoduls $10_4$ gelöst werden. Das Gestell 102 kann eine Halterung 116 aufweisen, auf der die abmontierten Komponenten abgelegt werden können. Ferner kann auf der Halterung 116 der Motor 30 beim Herausziehen verschoben werden.

Figur 9 zeigt eine perspektivische Ansicht der Temperiermaschine 100 und der Schaltschränke 150 im Produktionszustand.

Im Produktionszustand kann mit der Temperiermaschine 100 eine Lebensmittelmasse temperiert werden. Dazu wird die Lebensmittelmasse über eine Einleitöffnung 36 des Temperiermoduls $10_4$ in das Temperiermodul $10_4$ eingeleitet und entlang des Pfeils R1 durch das Temperiermodul $10_4$ gefördert. Das Temperiermodul $10_4$ ist mit dem Temperiermodul $10_3$ über den Verbindungskanal 104 gekoppelt. Über den Verbindungskanal 104 kann Lebensmittelmasse von dem Temperiermodul $10_4$ in das Temperiermodul $10_3$ geleitet werden. Durch das Temperiermodul $10_3$ wird die Lebensmittelmasse in Richtung des Pfeils R2 gefördert. Das Temperiermodul $10_3$ ist wiederum über einen Verbindungskanal (nicht gezeigt) mit dem Temperiermodul $10_2$ verbunden. Durch das Temperiermodul $10_2$ wird die Lebensmittelmasse in Richtung des Pfeils R3 gefördert. Das Temperiermodul $10_2$ ist über einen Verbindungskanal 104 mit dem Temperiermodul $10_1$ verbunden. Durch das Temperiermodul $10_1$ wird die Lebensmittelmasse in Richtung des Pfeils R4 gefördert. Aus der Ausleitöffnung 36 des Temperiermoduls $10_1$ wird die Lebensmittelmasse aus der Temperiermaschine 100 ausgeleitet und kann dann beispielsweise einer Überziehvorrichtung zu geführt werden. Die Förderrichtung R1, R2, R3, R4 der Lebensmittelmasse in den Temperiermodulen $10_1$, $10_2$, $10_3$, $10_4$ verläuft in den Temperiermodul $10_2$, $10_3$, $10_4$ entgegengesetzt zu der Förderrichtung R1, R2, R3, R4 des vorherigen Temperiermoduls $10_1$, $10_2$, $10_3$, $10_4$. Die Förderrichtung wechselt somit in den Temperiermodulen $10_1$, $10_2$, $10_3$, $10_4$. Die Lebensmittelmasse wird dementsprechend mäanderförmig durch die Temperiermaschine 100 gefördert.

Figur 10 zeigt eine vergrößerte Ansicht des Details X in Figur 9.

In Figur 10 ist erkennbar wie benachbarte Temperiermodule, hier die Temperiermodule $10_1$ und $10_2$, über den Verbindungskanal 104 miteinander gekoppelt werden. Dazu kann der Verbindungskanal 104 mit den zweiten Anschlussflanschen 26 der Temperiermodule $10_1$ und $10_2$ verbunden sein. Insbesondere kann der Verbindungskanal 104 mit den zweiten Anschlussflanschen 26 der Temperiermodule $10_1$ und $10_2$ verschraubt sein. Der Verbindungskanal 104 koppelt somit die Ausleit- bzw. Einleitöffnungen 38 an den zweiten Anschlussflanschen 26 der Temperiermodule $10_1$ und $10_2$ miteinander, um Lebensmittelmasse von einem Temperiermodul $10_2$ zum nächsten Temperiermodul $10_1$ leiten zu können.

Figur 11 zeigt schematisch das Prinzip der Temperatursteuerung: Man erkennt die Anordnung der Temperiermodule $10_1$ bis $10_4$, die jeweils über einen Verbindungskanal 104 miteinander verbunden sind. Die Fließrichtung der Lebensmittelmasse ist durch Pfeile innerhalb der Temperiermodule $10_1$ bis $10_4$ angegeben. Die Lebensmittelmasse tritt in das Temperiermodul $10_4$ über die Einleitöffnung 36 ein. Das gesamte Temperiermodul $10_4$ und etwa das in Materialstromrichtung folgende erste Drittel des Temperiermoduls $10_3$ bilden eine Dekristallisationstufe 118, die über einen Wassertemperierkreis 120 mit einer Zuleitung 122, einer Verbindungsleitung 124 zwischen den Temperiermodulen $10_4$ und $10_3$ sowie einer Ableitung 126 mit Temperierfluid versorgt wird. Diese Dekristallisationstufe 118 wird über ein Trennelement $44_1$ von einer nachfolgenden ersten Kühlstufe 128 getrennt. Die erste Kühlstufe 128 erstreckt sich etwa über die folgenden zwei Drittel des Temperiermoduls $10_3$ und die sich materialstromabwärts anschließenden zwei Drittel des Temperiermoduls $10_2$. Auch diese erste Kühlstufe 128 wird mit einem Wassertemperierkreis 130 mit einer Zuleitung 132, einer Verbindungsleitung 134 zwischen den Temperiermodulen $10_3$ und $10_2$ sowie einer Ableitung 136 mit Temperierfluid versorgt. Materialstromabwärts auf die erste Kühlstufe 128 folgend schließt sich getrennt durch ein weiteres Trennelement $44_2$ eine zweite Kühlstufe 138 an. Die zweite Kühlstufe 138 erstreckt sich etwa über das materialstromabwärts folgende letzte des Temperiermoduls $10_2$ und die sich materialstromabwärts anschließenden zwei Drittel des Temperiermoduls $10_1$. Auch diese zweite Kühlstufe 138 wird mit einem Wassertemperierkreis 140 mit einer Zuleitung 142, einer Verbindungsleitung 144 zwischen den Temperiermodulen $10_2$ und $10_1$ sowie einer Ableitung 146 mit Temperierfluid versorgt. Materialstromabwärts auf die zweite Kühlstufe 138 folgend schließt sich getrennt durch ein weiteres Trennelement $44_3$ eine Anwärmstufe 148 an. Die Anwärmstufe 148 erstreckt sich etwa über das folgenden letzte Drittel des Temperiermoduls $10_1$. Auch diese Anwärmstufe 148 wird mit einem Wassertemperierkreis 150 mit einer Zuleitung 152 und einer Ableitung 154 mit Temperierfluid versorgt.

Schließlich sind noch mehrere Temperatur- und Drucksensoren 156 zur Erfassung der Temperatur- und des Drucks der Lebensmittelmasse vorgesehen.

Dieser Aufbau der Hintereinanderschaltung mehrerer Temperiermodule mit entsprechenden Wassertemperierkreisen erlaubt eine gezielte Temperatursteuerung für die Lebensmittelmasse zur Aufbereitung und Weiterverarbeitung. Es entsteht ein Temperaturgefälle, das sich wie folgt beschreiben lässt:

Temperaturstufen:

tDS= Temperatur in der Dekristallisationsstufe,
tK1= Temperatur in der Kühlstufe 1,
tK2= Temperatur in der Kühlstufe 2,
tAW= Temperatur in der Anwärmstufe,

Temperaturgefälle zwischen Dekristallisationsstufe und erster Kühlstufe:

$$\Delta t1 = tDS\text{-}tK1$$

Temperaturgefälle zwischen erster und zweiter Kühlstufe:

$$\Delta t2 = tK1\text{-}tk2$$

Temperaturgefälle zwischen zweiter Kühlstufe und Anwärmstufe:

$$\Delta t3 = tK2\text{-}tAW$$

Gesamttemperaturgefälle:

$$\Delta tgesamt = \Delta t1 + \Delta t2 + \Delta t3$$

Je nach Beschickung der Dekristallisationsstufe, der einzelnen Kühlstufen sowie der Anwärmstufe mit auf eine gewünschte Temperatur eingestelltem Temperierfluid lässt sich dieses Temperaturgefälle in seinem Verlauf und in seinem Gesamtbetrag variabel einstellen und auf die verarbeitete Lebensmittelmasse anpassen.

Es versteht sich, dass die Einteilung unterschiedlich gestaltet werden kann. Es können Trennelemente entfernt oder ergänzt werden, um zusätzliche Wassertemperierkreise bereitzustellen oder einzelne Wassertemperierkreise zu entfernen. Auch können die Trennelemente versetzt werden, um beispielsweise die Dekristallisationsstufe, einzelne Kühlstufen oder die Anwärmstufe kürzer bzw. länger auszubilden. Insgesamt bietet die Erfindung eine variable Temperatursteuerung für die Lebensmittelmasse.

Das voranstehend beschriebene Temperiermodul ermöglicht aufgrund seines als eine fest verbundene Baugruppe ausgebildeten Temperierrohrs eine schnelle und einfache Reinigung. Das erfindungsgemäße Temperiermodul erfüllt somit hohe hygienische Standards.

**Patentansprüche**

1. Temperiermodul (10) für eine Temperiermaschine (100) zum Temperieren einer Lebensmittelmasse mit

   - wenigstens einer Schnecke (14), und
   - wenigstens einem Temperierrohr (12), in das die Schnecke (14) einsetzbar ist, wobei das Temperierrohr (12) und die Schnecke (14) zwischen sich einen Lebensmittelmasseförderkanal (16) festlegen, wobei das Temperierrohr (12) wenigstens ein Innenrohr (18) und wenigstens ein Außenrohr (20) umfasst, wobei das Innenrohr (18) und das Außenrohr (20) zwischen sich wenigstens eine Temperierkammer (22) festlegen,

   **dadurch gekennzeichnet, dass** das Innenrohr (18) und das Außenrohr (20) derart dauerhaft fest miteinander verbunden sind, dass das Temperierrohr (12) eine einstückige Baugruppe ohne lösbare Fügestellen ist.

2. Temperiermodul (10) nach Anspruch 1, wobei das Temperierrohr (12) wenigstens einen ersten Anschlussflansch (24) und wenigstens einen zweiten Anschlussflansch (26) aufweist, die das Innenrohr (18) und das Außenrohr (20) dauerhaft fest miteinander verbinden.

3. Temperiermodul (10) nach Anspruch 2, wobei das Innenrohr (18), das Außenrohr (20), der erste Anschlussflansch (24) und der zweite Anschlussflansch (26) stoffschlüssig miteinander verbunden, insbesondere verschweißt, sind.

4. Temperiermodul (10) nach Anspruch 2 oder 3, wobei der erste Anschlussflansch (24) mit wenigstens einem Anschlussstück (28) für einen Motor (30) verbindbar ist, wobei der zweite Anschlussflansch (26) mit wenigstens einem Verschlusselement (32) verbindbar ist, an dem die wenigstens eine Schnecke (14) gelagert ist und das ein Ende des Temperiermoduls (10) bildet, wobei das Verschlusselement (32) zur Entnahme der Schnecke (14) abnehmbar mit dem zweiten Anschlussflansch (26) verbunden ist,
   wobei insbesondere der Motor (30) über wenigstens eine Welle (34) mit der Schnecke (14) gekoppelt ist, wobei sich die Welle (34) durch das Anschlussstück (28) erstreckt.

5. Temperiermodul (10) nach einem der Ansprüche 2 bis 4,
   wobei der erste Anschlussflansch (24) und der zweite Anschlussflansch (26) jeweils wenigstens eine Einleitöffnung (36, 38) zum Einleiten der Lebensmittelmasse in den Lebensmittelmasseförderkanal (16) und/oder wenigstens eine Ausleitöffnung (36, 38) zum Ausleiten der Lebensmittelmasse aus dem Lebensmittelmasseförderkanal (16) aufweisen.

6. Temperiermodul (10) nach einem der Ansprüche 1 bis 5,
   wobei die Temperierkammer (22) einen oder mehrere Temperierkanäle aufweist, vorzugsweise wenigstens einen ersten Temperierkanal (40) und wenigstens einen zweiten Temperierkanal (42), die über wenigstens ein Trennelement (44) in der wenigstens einen Temperierkammer (22) getrennt sind.

**7.** Temperiermodul (10) nach Anspruch 6, wobei sich der erste Temperierkanal (40) und der zweite Temperierkanal (42) im wesentlichen wendelförmig durch die Temperierkammer (22) erstrecken.

**8.** Temperiermodul (10) nach Anspruch 6 oder 7, wobei das Temperierrohr (12) Anschlüsse (46, 48, 50, 52) aufweist, über die der erste Temperierkanal (40) und der zweite Temperierkanal (42) mit einem ersten Temperierkreislauf und einem zweiten Temperierkreislauf zur Zufuhr eines Temperierfluids koppelbar sind, wobei insbesondere das Temperierrohr (12) wenigstens einen Anschluss (54) zur Temperaturkontrolle der Lebensmittelmasse in dem Lebensmittelmasseförderkanal (16) aufweist.

**9.** Temperiermaschine (100) zum Temperieren einer Lebensmittelmasse mit wenigstens einem Temperiermodul ($10_1$, $10_2$, $10_3$, $10_4$) nach einem der Ansprüche 1 bis 8.

**10.** Temperiermaschine (100) nach Anspruch 9, wobei die Temperiermaschine mehrere Temperiermodule ($10_1$, $10_2$, $10_3$, $10_4$) nach einem der Ansprüche 1 bis 9 aufweist, wobei die einzelnen Temperiermodule ($10_1$, $10_2$, $10_3$, $10_4$) jeweils über einen Verbindungskanal (104) zum Fördern der Lebensmittelmasse von einem Temperiermodul ($10_1$, $10_2$, $10_3$, $10_4$) zum massestromabwärts liegenden Temperiermodul ($10_1$, $10_2$, $10_3$, $10_4$) gekoppelt sind wobei insbesondere der Verbindungskanal (104) eine Ausleitöffnung (36, 38) eines Temperiermoduls ($10_1$, $10_2$, $10_3$, $10_4$) mit einer Einleitöffnung (36, 38) des nächsten Temperiermoduls ($10_1$, $10_2$, $10_3$, $10_4$) koppelt.

**11.** Temperiermaschine (100) nach Anspruch 9 oder 10, wobei die Temperiermaschine (100) wenigstens ein verlagerbares oder stationäres Gestell (102) aufweist, an dem das wenigstens eine Temperiermodul ($10_1$, $10_2$, $10_3$, $10_4$), insbesondere horizontal, angeordnet ist.

**12.** Temperiermaschine nach einem der Ansprüche 9-11, wobei die Temperiermaschine dazu ausgebildet ist, benachbart zu einem Massevorratsbehälter zum Speichern der Lebensmittelmasse und/oder zu einer die Lebensmittelmasse weiterverarbeitenden Vorrichtung, insbesondere einer Lebensmittelmasse-Überziehmaschine oder/und einer Lebensmittelmasse-Dekorationsmaschine oder/und einer Lebensmittelmasse-Gießmaschine, angeordnet zu sein.

**13.** Verfahren zum Temperieren einer Lebensmittelmasse mit einem Temperiermodul (10) nach einem der Ansprüche 1 bis 8, insbesondere mit einer Temperiermaschine nach einem der Ansprüche 9 bis 12, wobei die wenigstens eine Temperierkammer (22) von einem Temperierfluid, insbesondere Wasser, durchströmt wird, um die Lebensmittelmasse in dem Lebensmittelmasseförderkanal (16) zu temperieren.

**14.** Verfahren nach Anspruch 13, wobei die Lebensmittelmasse in einen ersten Temperierkanal eingeführt wird, der eine Dekristallisationsstufe für die Lebensmittelmasse bildet, wobei weiter die Lebensmittelmasse aus dem ersten Temperierkanal mittelbar oder unmittelbar in einen zweiten Temperierkanal geführt wird, der eine Kühlstufe bildet, und wobei die Lebensmittelmasse aus dem zweiten Temperierkanal in einen dritten Temperierkanal geführt wird, die eine Anwärmstufe bildet, wobei insbesondere jeder der Temperierkanäle über einen gesonderten Temperierfluidkreis mit Temperierfluid versorgbar ist.

**15.** Verfahren nach Anspruch 13 oder 14, wobei unter Steuerung der Temperatur und des Durchflusses des jeweiligen Temperierfluids in den zugehörigen Temperierfluidkreis oder/und unter Steuerung der Fördergeschwindigkeit der Lebensmittelmasse durch den jeweiligen Temperierkanal in Abstimmung mit der Länge des jeweiligen Temperierkanals eine vorbestimmte Verweilzeit der Lebensmittelmasse in dem jeweiligen Temperierkanal einstellbar ist.

**Claims**

**1.** A tempering module (10) for a tempering machine (100) for controlling the temperature of a food mass, having

    - at least one worm gear (14), and
    - at least one tempering tube (12) into which the worm gear (14) is insertable, wherein the tempering tube (12) and the worm gear (14) delimit a food mass conveying channel (16) between them, wherein the tempering tube (12) includes at least one inner tube (18) and at least one outer tube (20), wherein the inner tube (18) and the outer tube (20) delimit at least one tempering chamber (22) between them,

**characterized in that** the inner tube (18) and the outer tube (20) are permanently fixedly connected to one another in such a way that the tempering tube (12) is a one-piece module without separable joints.

**2.** The tempering module (10) according to Claim 1, wherein the tempering tube (12) has at least one first connecting flange (24) and at least one second connecting flange (26) that permanently fixedly connect the inner tube (18) and the outer tube (20) to one another.

3. The tempering module (10) according to Claim 2, wherein the inner tube (18), the outer tube (20), the first connecting flange (24), and the second connecting flange (26) are integrally joined together, in particular welded.

4. The tempering module (10) according to Claim 2 or 3, wherein the first connecting flange (24) is connectable to at least one connecting piece (28) for a motor (30), wherein the second connecting flange (26) is connectable to at least one closure element (32) on which the at least one worm gear (14) is supported and which forms one end of the tempering module (10), wherein for removal of the worm gear (14), the closure element (32) is detachably connected to the second connecting flange (26),
wherein in particular the motor (30) is coupled to the worm gear (14) via at least one shaft (34), wherein the shaft (34) extends through the connecting piece (28).

5. The tempering module (10) according to one of Claims 2 to 4,
wherein the first connecting flange (24) and the second connecting flange (26) each have at least one inlet opening (36, 38) for introducing the food mass into the food mass conveying channel (16), and/or at least one outlet opening (36, 38) for discharging the food mass from the food mass conveying channel (16).

6. The tempering module (10) according to one of Claims 1 to 5,
wherein the tempering chamber (22) has one or more tempering channels, preferably at least one first tempering channel (40) and at least one second tempering channel (42), which are separated in the at least one tempering chamber (22) via at least one separating element (44).

7. The tempering module (10) according to Claim 6, wherein the first tempering channel (40) and the second tempering channel (42) extend essentially helically through the tempering chamber (22).

8. The tempering module (10) according to Claim 6 or 7, wherein the tempering tube (12) has connections (46, 48, 50, 52) via which the first tempering channel (40) and the second tempering channel (42) are coupleable to a first tempering circuit and a second tempering circuit for supplying a tempering fluid, wherein in particular the tempering tube (12) has at least one connection (54) for controlling the temperature of the food mass in the food mass conveying channel (16).

9. A tempering machine (100) for controlling the temperature of a food mass, having at least one tempering module ($10_1$, $10_2$, $10_3$, $10_4$) according to one of Claims 1 to 8.

10. The tempering machine (100) according to Claim 9, wherein the tempering machine has multiple tempering modules ($10_1$, $10_2$, $10_3$, $10_4$) according to one of Claims 1 to 9, wherein the individual tempering modules ($10_1$, $10_2$, $10_3$, $10_4$) are each coupled via a connecting channel (104) for conveying the food mass from one tempering module ($10_1$, $10_2$, $10_3$, $10_4$) to the tempering module ($10_1$, $10_2$, $10_3$, $10_4$) situated downstream in the mass flow,
wherein in particular the connecting channel (104) couples an outlet opening (36, 38) of one tempering module ($10_1$, $10_2$, $10_3$, $10_4$) to an inlet opening (36, 38) of the next tempering module ($10_1$, $10_2$, $10_3$, $10_4$).

11. The tempering machine (100) according to Claim 9 or 10,
wherein the tempering machine (100) has at least one movable or stationary frame (102) on which the at least one tempering module ($10_1$, $10_2$, $10_3$, $10_4$) is situated, in particular horizontally.

12. The tempering machine (100) according to one of Claims 9 to 11, wherein the tempering machine is designed to be situated adjacent to a material storage tank for storing the food mass and/or adjacent to a device for further processing the food mass, in particular a food mass coating machine and/or a food mass decorating machine and/or a food mass pouring machine.

13. A method for controlling the temperature of a food mass by means of a tempering module (10) according to one of Claims 1 to 8, in particular by means of a tempering machine (100) according to one of Claims 9 to 12, wherein a tempering fluid, in particular water, flows through the at least one tempering chamber (22) in order to control the temperature of the food mass in the food mass conveying channel (16).

14. The method according to Claim 13, wherein the food mass is introduced into a first tempering channel that forms a decrystallization stage for the food mass, wherein the food mass is further directly or indirectly led from the first tempering channel into a second tempering channel that forms a cooling stage, and wherein the food mass is led from the second tempering channel into a third tempering channel that forms a warming stage, wherein in particular each of the tempering channels is suppliable with tempering fluid via a separate tempering fluid circuit.

15. The method according to Claim 13 or 14, wherein a predetermined residence time of the food mass in the particular tempering channel is adjustable by controlling the temperature and the flow of the particular tempering fluid through the associated tempering fluid circuit, and/or by controlling the conveying speed of the food mass through the particular tempering channel in coordination with the length of the particular tempering channel.

**Revendications**

1. Module de tempérage (10) pour une machine à tempérer (100) destinée à tempérer une matière alimentaire, comportant

   - au moins une vis sans fin (14) et
   - au moins un tube de tempérage (12) dans lequel la vis sans fin (14) peut être introduite, le tube de tempérage (12) et la vis sans fin (14) définissant entre eux un canal de transport de matière alimentaire (16), le tube de tempérage (12) comprenant au moins un tube intérieur (18) et au moins un tube extérieur (20), le tube intérieur (18) et le tube extérieur (20) définissant entre eux au moins une chambre de tempérage (22),

   **caractérisé en ce que** le tube intérieur (18) et le tube extérieur (20) sont reliés entre eux de manière fixe et permanente de telle manière que le tube de tempérage (12) est un ensemble d'une seule pièce sans joints séparables.

2. Module de tempérage (10) selon la revendication 1, dans lequel le tube de tempérage (12) comprend au moins une première bride de raccordement (24) et au moins une deuxième bride de raccordement (26) qui relient entre eux de manière fixe et permanente le tube intérieur (18) et le tube extérieur (20).

3. Module de tempérage (10) selon la revendication 2, dans lequel le tube intérieur (18), le tube extérieur (20), la première bride de raccordement (24) et la deuxième bride de raccordement (26) sont reliés entre eux par liaison de matière, en particulier soudés ensemble.

4. Module de tempérage (10) selon la revendication 2 ou 3,
   dans lequel la première bride de raccordement (24) peut être reliée à au moins une pièce de raccordement (28) pour un moteur (30), la deuxième bride de raccordement (26) peut être raccordée à au moins un élément de fermeture (32) sur lequel est montée ladite au moins une vis sans fin (14) et qui forme une extrémité du module de tempérage (10), l'élément de fermeture (32) étant relié de manière amovible à la deuxième bride de raccordement (26) pour pouvoir retirer la vis sans fin (14),
   dans lequel, en particulier, le moteur (30) est couplé à la vis sans fin (14) par au moins un arbre (34), l'arbre (34) s'étendant à travers la pièce de raccordement (28).

5. Module de tempérage (10) selon l'une des revendications 2 à 4,
   dans lequel la première bride de raccordement (24) et la deuxième bride de raccordement (26) comprennent chacune au moins une ouverture d'introduction (36, 38) pour introduire la matière alimentaire dans le canal de transport de matière alimentaire (16) et/ou au moins une ouverture de décharge (36, 38) pour décharger la matière alimentaire du canal de transport de matière alimentaire (16).

6. Module de tempérage (10) selon l'une des revendications 1 à 5,
   dans lequel la chambre de tempérage (22) comprend un ou plusieurs canaux de tempérage, de préférence au moins un premier canal de tempérage (40) et au moins un deuxième canal de tempérage (42) qui sont séparés par au moins un élément de séparation (44) dans ladite au moins une chambre de tempérage (22).

7. Module de tempérage (10) selon la revendication 6, dans lequel le premier canal de tempérage (40) et le deuxième canal de tempérage (42) s'étendent sensiblement en spirale à travers la chambre de tempérage (22).

8. Module de tempérage (10) selon la revendication 6 ou 7,
   dans lequel le tube de tempérage (12) comprend des raccords (46, 48, 50, 52) par lesquels le premier canal de tempérage (40) et le deuxième canal de tempérage (42) peuvent être couplés à un premier circuit de tempérage et un deuxième circuit de tempérage pour l'amenée d'un fluide de tempérage, le tube de tempérage (12) présentant en particulier au moins un raccord (54) pour le contrôle de température de la matière alimentaire dans le canal de transport de matière alimentaire (16).

9. Machine à tempérer (100) pour tempérer une matière alimentaire, comportant au moins un module de tempérage ($10_1$, $10_2$, $10_3$, $10_4$) selon l'une des revendications 1 à 8.

10. Machine à tempérer (100) selon la revendication 9, dans laquelle la machine à tempérer comprend plusieurs modules de tempérage ($10_1$, $10_2$, $10_3$, $10_4$) selon l'une des revendications 1 à 9, dans laquelle les différents modules de tempérage ($10_1$, $10_2$, $10_3$, $10_4$) sont chacun couplés par un canal de liaison (104) pour transporter la matière alimentaire d'un module de tempérage ($10_1$, $10_2$, $10_3$, $10_4$) au module de tempérage ($10_1$, $10_2$, $10_3$, $10_4$) situé en aval dans le flux de matière, notamment le canal de liaison (104) couplant une ouverture de décharge (36, 38) d'un module de tempérage ($10_1$, $10_2$, $10_3$, $10_4$) à une ouverture d'introduction (36, 38) du module de tempérage suivant ($10_1$, $10_2$, $10_3$, $10_4$).

11. Machine à tempérer (100) selon la revendication 9 ou 10,
dans laquelle la machine à tempérer (100) comprend au moins un bâti (102) mobile ou stationnaire sur lequel est disposé ledit au moins un module de tempérage ($10_1$, $10_2$, $10_3$, $10_4$), en particulier horizontalement.

12. Machine à tempérer selon l'une des revendications 9 à 11,
dans laquelle la machine à tempérer est conçue pour être disposée au voisinage d'un récipient de stockage de matière servant à stocker la matière alimentaire et/ou d'un dispositif de transformation de la matière alimentaire, en particulier une machine à enrober la matière alimentaire et/ou une machine à décorer la matière alimentaire et/ou une machine à mouler la matière alimentaire.

13. Procédé de tempérage d'une matière alimentaire avec un module de tempérage (10) selon l'une des revendications 1 à 8, notamment avec une machine de tempérage selon l'une des revendications 9 à 12, dans lequel un fluide de tempérage, en particulier de l'eau, circule dans la chambre de tempérage (22) pour tempérer la matière alimentaire dans le canal de transport de matière alimentaire (16).

14. Procédé selon la revendication 13, dans lequel la matière alimentaire est introduite dans un premier canal de tempérage qui forme une étape de décristallisation pour la matière alimentaire, dans lequel, en outre, la matière alimentaire est conduite du premier canal de tempérage indirectement ou directement dans un deuxième canal de tempérage qui forme un étage de refroidissement, et dans lequel la matière alimentaire est conduite du deuxième canal de tempérage dans un troisième canal de tempérage qui forme un étage de chauffage, en particulier chacun des canaux de tempérage pouvant être alimenté en fluide de tempérage via un circuit de fluide de tempérage séparé.

15. Procédé selon la revendication 13 ou 14, dans lequel un temps de séjour prédéterminé de la matière alimentaire dans le canal de tempérage respectif peut être réglé en coordination avec la longueur du canal de tempérage respectif par commande de la température et du débit du fluide de tempérage respectif dans le circuit de fluide de tempérage associé et/ou par commande de la vitesse de transport de la matière alimentaire à travers le canal de tempérage respectif.

Fig.1

Fig.2

Fig.3

Fig.5

Fig.4

Fig.6                    Fig.7

EP 3 222 148 B1

Fig.9

Fig.8

Fig.10

EP 3 222 148 B1

Fig.11

200

205

209 211

210

201 202 204 203 206

Fig.14
Stand der Technik

200

208 205 207

Fig.12

Stand der Technik

208 207 200

208

208 206

208

208

Fig.13
Stand der Technik

19

EP 3 222 148 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 826502 A1